# EUROPÄISCHE PATENTSCHRIFT

(11) **EP 0 514 644 B1**
(45) Veröffentlichungstag und Bekanntmachung des Hinweises auf die Patenterteilung: **02.11.1994**
(21) Anmeldenummer: 92105416.9
(22) Anmeldetag: 28.03.1992
(51) Int. Cl.: B27K 3/50, B27K 3/52

(54) **Holzschutzmittel**
Wood preservative
Agent préservatif du bois

(30) Priorität: 18.04.1991 DE 4112652
(43) Veröffentlichungstag der Anmeldung: 25.11.1992
(60) Teilanmeldung: 94100141.4
(73) Patentinhaber: Dr. Wolman GmbH, D-76547 Sinzheim (DE)
(72) Erfinder: Goettsche, Reimer, Dr., W-7570 Baden-Baden 19 (DE); Borck, Hans-Volker, W-7570 Baden-Baden (DE)
(74) Vertreter: Zimmermann, Kornelia

(56) Entgegenhaltungen:
- EP-A- 0 102 093
- EP-A- 0 109 354
- EP-A- 0 234 461
- EP-A- 0 238 051
- EP-A- 0 238 051
- EP-A- 0 252 366
- EP-A- 0 278 641
- WO-A-82/03817
- FR-A- 2 227 103
- FR-A- 2 562 903
- US-A- 3 625 738

## Beschreibung

Holzschutzmittel auf der Basis anorganischer Kupferverbindungen mit Alkanolaminen als Komplexbildner sind bekannt (EP-A-00 89 958). Die Wirksamkeit dieser Mittel gegenüber holzzerstörenden Basidiomyceten reicht trotz hoher Kupfergehalte im Vergleich zu bekannten kupfer- und chromathaltigen Salzen mit vergleichbarem Kupfergehalt nicht aus.

Es wurde jetzt gefunden, daß Holzschutzmittel auf der Basis von Kupferverbindungen und Alkanolaminen, die eine Triazolverbindung und einen Emulgator enthalten, wobei der Gehalt der Kupferverbindung 2,50 bis 45 Gew.-%, des Alkanolamins 5,00 bis 50 Gew.-%, der Triazolverbindung 0,25 bis 15 Gew.-% und des Emulgators 0,5 bis 30 Gew.-% betragt, eine sehr gute Wirksamkeit gegenüber holzzerstörenden Basidiomyceten besitzen. Die Erfindung betrifft sowohl Mischungen, die eine Triazolverbindung und einen Emulgator enthalten, als auch Mischungen, die eine Triazolverbindung, einen Emulgator und eine Phosphoniumverbindung enthalten.

Trotz des Gehalts an Kupferverbindungen im Holzschutzmittel werden die Triazolverbindungen beim Verdünnen mit Wasser klar in Wasser emulgiert. Der Vorteil der erfindungsgemäßen Mittel liegt darin, daß Triazolverbindungen, die im Wasser nicht löslich sind, in den neuen Mitteln in Form wäßriger Emulsionen oder klarer wäßriger Konzentrate vorliegen. Beim Verdünnen mit Wasser entstehen klare wäßrige Flüssigkeiten.

Durch Zugabe von geringen Mengen an organischen Lösungsmitteln zum Holzschutzmittel, z.B. Alkoholen (Ethanol, Isopropanol), Glykolen (Ethylenglykol, Propylenglykol), Glykolethern (Ethylenglykolmonomethylether, Ethylenglykolmonoethylether), Glykoletherestern (Butylglykolacetat), Dimethylformamid, N-Methylpyrrolidon können homogene Konzentrate erhalten werden. Die Lösungsmittel wirken dabei zusätzlich als Lösungsvermittler für die Triazole. Bei der zusätzlichen Verwendung von Arylcarbonsäuren, Cycloalkylcarbonsäuren oder aliphatischen C₅-C₂₀-Mono- oder Dicarbonsäuren oder entsprechenden Amin-, Alkali- oder Kupfersalzen kann der Einsatz an Lösungsmitteln jedoch auf ein Minimum reduziert werden, um homogene Konzentrate zu erhalten.

Die Kupferverbindungen können als wasserlösliche oder wasserunlösliche Verbindungen eingesetzt werden, z.B. Kupfersulfat, Kupferacetat, Kupferhydroxid, Kupferoxid, Kupferborat, Kupferfluorid, Kupferhydroxidcarbonat.

Ein Alkanolamin ist insbesondere Monoethanolamin; der Einsatz von anderen Alkanolaminen z.B. Isopropanolamin, 1,1-, 1,2-Diaminoethanol, Aminoethylethanolamin, Diethanolamin, Triethanolamin, Methylethanolamin ist möglich.

Hierbei wird die Menge der zugesetzten Alkanolamine vorteilhaft so bemessen, daß sich in der verdünnten wäßrigen Imprägnierlösung ein pH-Wert von 7 oder mehr, vorzugsweise 8,5 bis 10,5, einstellt. Die Menge der Amine soll zur Komplexbildung des Kupfers ausreichen (1-g-Atom Kupfer benötigt ca. 4 mol Äquivalente Amin).

Eine Triazolverbindung ist beispielsweise
1-(2-(2,4-Dichlorphenyl)-4-methyl-1,3-dioxolan-2-ylmethyl)-1H-1,2,4-triazol
1-(2-(2,4-Dichlorphenyl)-1,3-dioxolan-2-ylmethyl)-1H-1,2,4-triazol (Azaconazol)
1-(2-(2,4-Dichlorphenyl)-4-ethyl-1,3-dioxolan-2-ylmethyl)-1H-1,2,4-triazol
1-(2-(2,4-Dichlorphenyl)-4-propyl-1,3-dioxolan-2-ylmethyl)-1H-1,2,4-triazol (Propiconazol)
1-(2-(2,4-Dichlorphenyl)-4-phenyl-1,3-dioxolan-2-ylmethyl)-1H-1,2,4-triazol
α-tert.-Butyl-a-(p-chlorphenylethyl)-H-1,2,4-triazol-1-ethanol (Tebuconazol).

Ein Emulgator ist beispielsweise ein anionischer, kationischer oder nichtionischer Emulgator oder eine Mischung davon. Nichtionische Emulgatoren sind z.B. Additionsprodukte von Ethylenoxid (EO) oder Propylenoxid oder deren Mischungen an organischen Hydroxyverbindungen, beispielsweise Alkylphenole, Fettsäuren, Fettalkohole und deren Mischungen. Als kationische Emulgatoren können z.B. quaternäre Ammoniumverbindungen und/oder Salze von Fettaminen (z.B. Dimethyl-(C₁₂-C₁₄)alkylamin) Verwendung finden.

Eine quaternäre Ammoniumverbindung ist z.B. eine Verbindung entsprechend der allgemeinen Formel R¹R²R³R⁴N+Z-, wobei
- R¹: einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch C₁- bis C₂₀-Alkyl oder Halogen substitutiert ist,
- R²: C₁- bis C₆-Alkyl, C₃- bis C₉-Alkoxyalkyl, Polymeres Ethylenoxid (EO) oder Propylenoxid (PO) mit EO bzw. PO n = 2 bis 50,
- R³: C₁- bis C₆-Alkyl, C₃- bis C₄-Alkoxy, Polymeres Ethylenoxid (EO) oder Propylenoxid (PO) mit EO bzw. PO n = 2 bis 50,
- R⁴: C₁- bis C₂₀-Alkyl
bedeutet oder je zwei der Reste R¹ bis R⁴ zusammen mit dem Stickstoffatom einen heterocyclischen Rest bilden, der 4 bis 5 C-Atome und eine, zwei oder drei Doppelbindungen enthält, wobei die Kohlenstoffatome gegebenenfalls durch C₁- bis C₄-Alkyl oder Halogen substituiert sind und Z einen Säurerest, z.B. Halogenid, bedeutet.

Als Phosphoniumverbindungen, die in der Triazolverbindung und Emulgator enthaltenden Mischung zusätzlich enthalten sein können, eignen sich besonders Verbindungen der Formel

R¹₃R²P⁺Y⁻,

in der
- R¹: einen Alkylrest mit 1 bis 6 Kohlenstoffatomen, einen Hydroxyalkylrest mit 1 bis 6 Kohlenstoffatomen oder einen Phenylrest,
- R²: einen Alkylrest mit 8 bis 18 Kohlenstoffatomen und
- Y: einen Säurerest, insbesondere ein Halogenidanion,
bedeutet.

Die Reste R¹ und R² sind vorzugsweise geradkettig.

Die quaternären Phosphoniumverbindungen können in den neuen Konzentraten einzeln oder als Gemische vorhanden sein. Beispiele für derartige Phosphoniumverbindungen sind Trimethyl-n-dodecyl-phosphoniumchlorid, Triethyl-n-decylphosphoniumbromid, Tri-n-propyl-n-tetradecylphopsphoniumchlorid, Trimethylol-n-hexadecylphosphoniumchlorid, Tri-n-butyl-n-tetradecylphosphoniumchlorid, Tri-n-butyl-n-dodecylphosphoniumbromid, Tri-n-butyl-n-decylphosphoniumchlorid, Tri-n-butyl-n-hexadecylphosphoniumbromid, Tri-n-hexyl-n-decylphosphoniumchlorid, Triphenyl-n-dodecylphosphoniumchlorid, Triphenyl-n-tetradecylphosphoniumbromid, Triphenyl-n-octadecylphosphoniumchlorid.

Aliphatische Carbonsäuren können zur Verbesserung der Homogenität der Konzentrate zugesetzt werden. Solche Säuren sind z.B. Propionsäure, Hexansäure, Heptansäure, verzweigte Carbonsäuren wie z.B. 2-Ethylenhexansäure, Isooctansäure, Neocarbonsäuren, aliphatische Dicarbonsäuren wie z.B. Sebacinsäure, Cycloalkylcarbonsäuren wie z.B. Cyclohexansäure, Arylcarbonsäuren wie z.B. Benzoesäure, 3- oder 4-Hydroxybenzoesäure.

Bei Verwendung der obengenannten Säuren ist es teilweise von Vorteil, durch Zusatz von komplexbildenden, polymeren Stickstoffverbindungen wie z.B. Polyethyleniminen die Holzschutzmitteleindringung bei großtechnischen Verfahren zu verbessern.

Polyethylenimine (PEI, Polymin) sind bekannt und entstehen durch Polymerisation von 1,2-Ethylenimin. In ihnen liegt der Stickstoff primär (Endgruppe), sekundär und tertiär (Verzweigung) vor. Geeignet sind Polyethylenimine mit n größer als 10; sehr gute Ergebnisse werden erzielt bei Verwendung von PEI mit einem Polymerisationsgrad n zwischen 50 und 1 000.

Die Holzschutzmittel können gegebenenfalls weitere Verbindungen, z.B. Verbindungen mit einem fungiziden Anion wie beispielsweise eine Borverbindung (z.B. Alkaliborat, Aminborat, Borsäure, Borsäureester), Fluoride (z.B. Kaliumfluorid und/oder Salze der Fluoroborsäure und/oder Fluorophosphorsäure und/oder Difluorophosphorsäure), enthalten.

Durch den Zusatz weiterer Wirkstoffe kann die Wirkungsbreite der erfindungsgemäßen Holzschutzmittel gegebenenfalls verbessert werden. Geeignete Verbindungen sind z.B. N-Organodiazeniumdioxyverbindungen, Organozinnverbindungen, besonders Tributyl(TBT)zinnverbindungen, Isothiazolinverbindungen der folgenden Formel 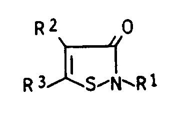
- R¹: ist Wasserstoff, ein Alkyl-, Alkenyl-, Alkinylrest mit 1 bis 18 Kohlenstoffatomen, Cycloalkylrest mit einem C₃- bis C₆-Ring und mit bis zu 12 Kohlenstoffatomen, ein Aralkyl- oder Arylrest mit bis zu 19 Kohlenstoffatomen
- R², R³: unabhängig voneinander Hydrogen-, Halogen- oder C₁- bis C₄-Alkylrest bzw. R² und R³ Teil eines Aromatenrestes.

Auch ein Zusatz weiterer Fungizide oder Insektizide ist möglich, z.B. in emulgierter Form, wie
N-Tridecyl-2,6-dimethylmorpholin (Tridemorph) und/oder
4-(3-para-tertiär-butylphenyl)2-methyl-propyl-2,6-cis-dimethylmorpholin (Fenpropimorph) und/oder
chlorierte Phenole
Tetrachlorisophthalsäure-dinitril
N-Cyclohexyl-N-methoxy-2,5-dimethyl-furan-3-carbonsäureamid
N-Dimethyl-N'-phenyl-(N-fluormethylthio)-sulfamid
N,N-Dimethyl-N'-toluyl-(N-fluormethylthio)-sulfamid
Benzimidazol-2-carbaminsäure-methylester
2-Thiocyanomethyl-thiobenzothiazol
2-Iodbenzoesäureanilid
1-(1',2',4'-Triazolyl-1')-(1-(4'-chlorphenoxy)-3,3-dimethylbutan-2-on
1-(1',2',4'-Triazolyl-1')-(1-(4'-chlorphenoxy)-3,3-dimethylbutan-2-ol
Hexachlorcyclohexan
0,0-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
3-Iodo-2-propylbutylcarbamat
0,0-Dimethyl-S-(2-methylamino-2-oxoethyl)-dithiophosphat
0,0-Dimethyl-0-(3,5,6-trichlor-2-pyridyl)-thiophosphat
0,0-Dimethyl-S-(N-phthalimido)-methyldithiophosphat
0,0-Diethyl-0-(α-cyanbenzyliden-amino)-thiophosphat
6,7,8,9,10-Hexachlor,1,5,5a,6,9,9a-hexahydro-6,9-methano-2,3,4-benzoedioxothiepien-3-oxid
(4-Ethoxyphenyl)-(dimethyl)-(3-(4-fluoro-3-phenoxy-phenyl)-propyl-silane
2-sek.-Butyl-phenyl-N-methylcarbamat
2-1-Propoxyphenyl-N-methyl-carbamat
N-Methyl-1-naphthyl-carbamat
Norbonen-dimethanohexa-chlorcyclosulfit
1-(4-Chlorphenyl)-3-(2,6-di-fluorbenzoyl)-harnstoff
synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-α-Cyano-3,3-phenoxybenzylester
3-(2,2-Dibromvinyl-2,2-dimethyl)-α-cyano-m-phenoxybenzyl-1R,3R)-cyclopropancarboxylat (Deltamethrin)
α-Cyano-3-phenoxybenzyl-isopropyl-2,4-chlorphenylacetat.

Die wasserverdünnbaren Holzschutzmittel enthalten - in konzentrierter Form - das Kupfer berechnet als Metall im allgemeinen, z.B. in einer Menge von 1,0 bis 15,0 % (Gewichtsprozent).

Geeignete Konzentrate bestehen z.B. aus
2,50 bis 45 %, insbesondere 10 bis 20 %, Kupferverbindungen
5,00 bis 50 %, insbesondere 20 bis 40 %, Alkanolamin
0,25 bis 15 %, insbesondere 1 bis 10 %, Triazolverbindungen
2,50 bis 40 %, insbesondere 10 bis 20 %, Phosphoniumverbindungen
0,5 bis 30 %, insbesondere 5 bis 15 %, eines Emulgators
0 bis 40 % Verbindung mit einem fungiziden anorganischen oder organischen Anion
0 bis 40 % organische Lösungsmittel
0 bis 40 % einer aliphatischen Mono- oder Dicarbonsäure und/oder Cycloalkylcarbonsäure und/oder Cycloarylcarbonsäure
0 bis 15 % einer komplexbildenden, polymeren Stickstoffverbindung,
wobei die Summe jeweils 100 Gew.-% ergibt, sowie gegebenenfalls untergeordnete Mengen an anderen Bestandteilen, wie z.B. Ammoniak, Korrosionsinhibitoren, komplexbildenden Säuren (z.B. Nitrilotriessigsäure, Ethylendiamintetraessigsäure bei Verwendung von Wasser mit höheren Härtegraden) und erforderlichenfalls Wasser, dessen Anteil jedoch im allgemeinen gering gehalten werden kann und das im wesentlichen der Handhabung dient.

Die Erfindung erstreckt sich jedoch neben den Holzschutzmitteln (Konzentrate) gleichermaßen auch auf die durch Verdünnung der Konzentrate mit Wasser herstellbaren Imprägnierlösungen entsprechend geringerer Einzelkon zentration. Die Anwendungskonzentration beträgt z.B. 0,01 bis 1,50 Gew.-% Metall, z.B. Kupfer, in der wäßrigen Imprägnierlösung, je nach Art der Imprägnierung und des Gefährdungsgrades des zu imprägnierenden Holzes.

Durch Auflösen der Kupfersalze, gegebenenfalls unter Wärmezufuhr, in den Alkanolaminen, gegebenenfalls unter Säure-, Wasser- oder Lösungsmittelzugabe, und anschließender Zugabe des Emulgators, und der Triazolverbindungen entstehen hochkonzentrierte Pasten, flüssige Konzentrate oder auch Zwei-Phasen-Mischungen, die nach dem Verdünnen mit Wasser zum Imprägnieren von Holz verwendet werden können. Sie ergeben auch bei hoher Konzentration in Wasser eine klare Flüssigkeit.

Die Anwendung der Imprägnierlösung zum Schutz von Holz kann durch handwerkliche Verfahren wie Sprühen, Streichen, Tauchen, Trogtränken oder durch großtechnische Verfahren wie Kesseldruckverfahren, Wechseldruckverfahren, Doppelvakuumverfahren erfolgen. Unter "Holz" sind sowohl massives Holz als auch Holzwerkstoffe wie Spanplatten, Sperrholz zu verstehen; hier kann gegebenenfalls das Holzschutzmittel auch im Leimuntermischverfahren eingebracht werden.

Die Kupferfixierung der erfindungsgemäßen Holzschutzmittel ist hoch, bei Einsatz für großtechnische Verfahren liegt sie bei mehr als 90 %.

Die Konzentrate oder Lösungen können durch wasserlösliche oder in Wasser emulgierbare Farbstoffe und/oder Pigmentpräparationen eingefärbt werden.

Eine Zugabe von Wachs-, Paraffin- und/oder Acrylatdispersionen zur Erzielung einer wasserabweisenden Wirkung oder Verbesserung der Fixierung ist möglich.

Die Konzentrate können gegebenenfalls auch in bindemittelenthaltende wasserverdünnbare Systeme (Grundierungen, Lasuren) eingearbeitet werden.

Die folgenden Beispiele erläutern die Erfindung.

Grenzwertbestimmung der Wirkung gegen holzzerstörende Pilze.

Das Verfahren dient zur Bestimmung der vorbeugenden Wirkung von Holzschutzmitteln gegen holzzerstörende Pilze.

Gleichartige, bei 103°C bis zur Gewichtskonstanz getrocknete Holzklötzchen (5 x 2,5 x 1,5 cm) werden mit abgestuften Mengen des zu prüfenden Holzschutzmittels vollgetränkt, getrocknet, mit Wasser ausgewaschen (Auswaschung der Wirkstoffmischung aus dem Holz) und in Glasschalen dem Angriff von Kulturen holzzerstörender Pilze ausgesetzt. Als Nährboden für die Pilze dient Malzagar (enthaltend 4 % Malzextrakt). Die durch den Pilzbefall bewirkte Zerstörung des Holzes wird durch den Gewichtsverlust der Probehölzer erfaßt; ein Gewichtsverlust von 2 % und mehr wird als Holzzerstörung gewertet.

Angegeben wird eine untere Wirkstoffkonzentration, bei der das Holz gerade beginnt zerstört zu werden, und eine obere Wirkstoffkonzentration, bei der keine Holzzerstörung zu erkennen ist, somit ein vollständiger Holzschutz erreicht ist. Für die Bewertung eines Holzschutzmittels in der Praxis ist immer von der oberen Wirkstoffkonzentration auszugehen.

Grenzwertbestimmung der Wirkung gegen holzzerstörende Pilze (in Kg Wirkstoff oder Mischung der Wirkstoffe je m³ Holz).

Das Ergebnis ist wie folgt zu verstehen. Je geringer der Grenzwert ist, desto besser ist die fungizide Wirkung. 1 kg/m³ ist also besser als 2 kg/m³.

### Beispiel A (nicht erfindungsgemäß)

20 Gew.% Cu(OH)₂CuCO₃
45 Gew.% Monoethanolamin
10 Gew.% Borsäure
25 Gew.% Wasser
Grenzwerte gegenüber den holzzerstörenden Basidiomyceten Coniophora puteana, Poria placenta mehr als 35 kg/m³.

### Beispiel B (nicht erfindungsgemäß)

17,5 % Cu(OH)₂·CuCO₃
42 % Monoethanolamin
30 % Borsäure
10,5 % Wasser
Grenzwerte gegenüber Coniophora puteana, Poria placenta mehr als 35 kg/m³.

### Beispiel C (nicht erfindungsgemäß)

| Grenzwerte für Triazolverbindungen gelöst in Aceton | | |
|---|---|---|
| | Azaconazol | Propiconazol |
| Coniophora puteana | 2,8 bis 5,7 | 0,21 bis 0,33 kg/m³ |
| Poria placenta | 0,9 bis 1,5 | 0,57 bis 0,91 kg/m³ |

### Beispiel D (nicht erfindungsgemäß)

n-Tributyl-Tetradecyl-Phosphoniumchlorid 50 % (handelsüblich) gelöst in Wasser

| Grenzwerte | |
|---|---|
| Coniophora puteana | 7,7 bis 12,3 kg/m³ |
| Poria placenta | 4,7 bis 7,3 kg/m³ |

### Beispiel 1

14,0 % Cu(OH)₂CuCO₃
33,5 % Monoethanolamin
7,5 % Borsäure
6,0 % Propionsäure
19,0 % Wasser
4,0 % Propiconazol
10,0 % ethoxyliertes Nonylphenol (10 Ethylenoxid je Nonylphenol = EO 10)
6,0 % Propylenglykol

| Grenzwerte | |
|---|---|
| Coniophora puteana | 3,0 bis 4,7 kg/m³ |
| Poria placenta | 4,7 bis 7,3 kg/m³ |

### Beispiel 2

14,0 % Cu(OH)₂CuCO₃
33,5 % Monoethanolamin
22,0 % Benzoesäure
10,5 % Wasser
4,0 % Propiconazol
10,0 % ethoxyliertes Nonylphenol
6,0 % Propylenglykol

| Grenzwerte | |
|---|---|
| Coniophora puteana | 4,6 bis 7,2 kg/m³ |
| Poria placenta | 4,7 bis 7,3 kg/m³ |

### Beispiel 3

14,0 % Cu(OH)₂CuCO₃
33,5 % Monoethanolamin
22,0 % Benzoesäure
10,5 % Wasser
2,5 % Propiconazol
1,5 % Azaconazol
10,0 % ethoxyliertes Nonylphenol
6,0 % Propylenglykol

| Grenzwerte | |
|---|---|
| Coniophora puteana | 4,6 bis 7,2 kg/m³ |
| Poria placenta | 7,3 bis 11,2 kg/m³ |

### Beispiel 4

14,0 % Cu(OH)₂CuCO₃
27,0 % Monoethanolamin
7,5 % Polymin n = 150
21,0 % Benzoesäure
14,0 % Wasser
4,0 % Propiconazol
10,0 % ethoxyliertes Nonylphenol
9,0 % Propylenglykol

| Grenzwerte | |
|---|---|
| Coniophora puteana | 3,4 bis 4,6 kg/m³ |
| Poria placenta | 4,6 bis 7,2 kg/m³ |

## Patentansprüche

1. Holzschutzmittel, enthaltend eine Kupferverbindung und ein Alkanolamin, dadurch gekennzeichnet, daß es zusätzlich eine Triazolverbindung und einen Emulgator enthält und der Gehalt der Kupferverbindung 2,50 bis 45 Gew.-%, des Alkanolamins 5,00 bis 50 Gew.-%, der Triazolverbindung 0,25 bis 15 Gew.-% und des Emulgators 0,5 bis 30 Gew.-%, beträgt.

2. Holzschutzmittel gemäß Anspruch 1, dadurch gekennzeichnet, daß es 2,50 bis 45 Gew.-% einer Kupferverbindung, 5,00 bis 50 Gew.-% eines Alkanolamins, 0,25 bis 15 Gew.-% einer Triazolverbindung, 2,50 bis 40 Gew.-% einer Phosphoniumverbindung und 0,5 bis 30 Gew.-% eines Emulgators enthält.

3. Verfahren zum Schutz von Holz, dadurch gekennzeichnet, daß man das Holz mit einer wirksamen Menge eines Holzschutzmittels gemäß Anspruch 1 behandelt.

4. Imprägnierlösung zum Imprägnieren von Holz zum Schutz gegen Pilze, enthaltend ein Holzschutzmittel gemäß Anspruch 1 und zusätzlich Wasser, wobei die Anwendungskonzentration 0,01 bis 1,50 Gew.-% Kupfer, berechnet als Metall, in der Imprägnierlösung beträgt.

5. Verfahren zum Imprägnieren von Holz, dadurch gekennzeichnet, daß man ein Holzschutzmittel gemäß Anspruch 1 mit Wasser verdünnt und das Holz mit einer wirksamen Menge der wäßrigen Verdünnung behandelt.

## Claims

1. A wood preservative containing a copper compound and an alkanolamine, which wood preservative additionally contains a triazole compound and an emulsifier, and the copper compound content is from 2.50 to 45% by weight, the alkanolamine content from 5.00 to 50% by weight, the triazole compound content from 0.25 to 15% by weight and the emulsifier content from 0.5 to 30% by weight.

2. A wood preservative as claimed in claim 1, which contains from 2.50 to 45% by weight of a copper compound, from 5.00 to 50% by weight of an alkanolamine, from 0.25 to 15% by weight of a triazole compound, from 2.50% to 40% by weight of a phosphonium compound and from 0.5 to 30% by weight of an emulsifier.

3. A method of preserving wood, wherein the wood is treated with an effective amount of a wood preservative as claimed in claim 1.

4. An impregnating solution for impregnating wood for preservation against fungi, containing a wood preservative as claimed in claim 1 and in addition water, the application concentration being from 0.01 to 1.50% by weight of copper, calculated as metal, in the impregnating solution.

5. A method of impregnating wood, wherein a wood preservative as claimed in claim 1 is diluted with water and the wood is treated with an effective amount of the aqueous dilution.

## Revendications

1. Moyen de protection du bois, contenant un composé de cuivre et une alcanolamine, caractérisé par le fait qu'il contient, en outre, un composé de triazole et un émulsifiant et la teneur en composé de cuivre est de 2,50 à 45 % en poids, en alcanolamine de 5,00 à 50 % en poids, en composé de triazole de 0,25 à 15 % en poids et en émulsifiant de 0,5 à 30 % en poids.

2. Moyen de protection du bois selon la revendication 1, caractérisé par le fait qu'il contient 2,5 à 45 % en poids d'un composé de cuivre, 5,00 à 50 % en poids d'une alcanolamine, 0,25 à 15 % en poids d'un composé de triazole, 2,50 à 40 % en poids d'un composé de phosphonium et 0,5 à 30 % en poids d'un émulsifiant.

3. Procédé de protection du bois, caractérisé par le fait que l'on traite le bois avec une quantité efficace d'un moyen de protection du bois selon la revendication 1.

4. Solution d'imprégnation pour imprégner le bois en vue de sa protection contre les champignons, contenant un moyen de protection du bois selon la revendication 1 et, en outre, de l'eau, la concentration d'emploi étant de 0,01 à 1,50 % en poids de cuivre, calculé comme métal, dans la solution d'imprégnation.

5. Procédé pour imprégner le bois, caractérisé par le fait que l'on fait dilué avec de l'eau un moyen de protection du bois selon la revendication 1 et qu'on traite le bois avec une quantité efficace de la dilution aqueuse.
